# EUROPEAN PATENT SPECIFICATION

(11) **EP 1 901 451 B1**
(45) Date of publication and mention of the grant of the patent: **24.04.2013**
(21) Application number: 07106460.4
(22) Date of filing: 18.04.2007
(51) Int. Cl.: H04W 74/08

(54) **Uplink communication method and radio terminal in radio communication system**
Aufwärtsstreckenkommunikationsverfahren und Funkendgerät in einem Funkkommunikationssystem
Procédé de communication montante et terminal radio dans un système de communication radio

(30) Priority: 12.09.2006 JP 2006246743
(43) Date of publication of application: 19.03.2008
(73) Proprietor: Fujitsu Ltd., Kawasaki-shi, Kanagawa 211-8588 (JP)
(72) Inventor: Nibe, Keiji, Kawasaki-shi, Kanagawa 211-8588 (JP)
(74) Representative: Hitching, Peter Matthew

(56) References cited:
- WO-A1-2004/073337
- US-A1- 2005 141 436
- BRANQUINHO O C ET AL: "Mitigating 802.11 Mac Anomaly Using SNR To Control Backoff Contention Window", COMPUTING IN THE GLOBAL INFORMATION TECHNOLOGY, 2006. ICCGI 2006. INTE RNATIONAL MULTI-CONFERENCE ON BUCHAREST, ROMANIA 01-03 AUG. 2006, PISCATAWAY, NJ, USA,IEEE, 1 July 2006 (2006-07-01), pages 55-55, XP031056623, ISBN: 978-0-7695-2629-4

## Description

### BACKGROUND OF THE INVENTION

### (1) Field of the Invention

The present invention relates to an uplink communication method and a radio terminal in a radio communication system, and particularly to a technique suitable for use in a radio communication system which performs communications by radio in W-CDMA (Wideband-Code Division Multiple Access).

### (2) Description of Related Art

W-CDMA is one of radio communication interfaces defined by IMT-2000 (International Mobile Telecommunications-2000), which is in a position of the representative radio communication system.

W-CDMA enables multi-media access of voice, motion pictures, data and so forth at a transmission rate of up to 384 kbps.

Communication systems called HSDPA (High Speed Downlink Packet Access) and HSUPA (High Speed Uplink Packet Access) based on the technique of W-CDMA are under research and development in recent years.

In contrast to the current W-CDMA, HSPDA is a technique for performing high-speed downlink packet transmission in the down direction from a base station to a terminal (UE: User Equipment), whereas HSUPA is a technique for performing high-speed uplink packet transmission in the up direction, which is opposite to the down direction. HSDPA is standardized by 3GPP Release 5 (3rd Generation Partnership Project Release 5), and HSUPA by 3GPP Release 6.

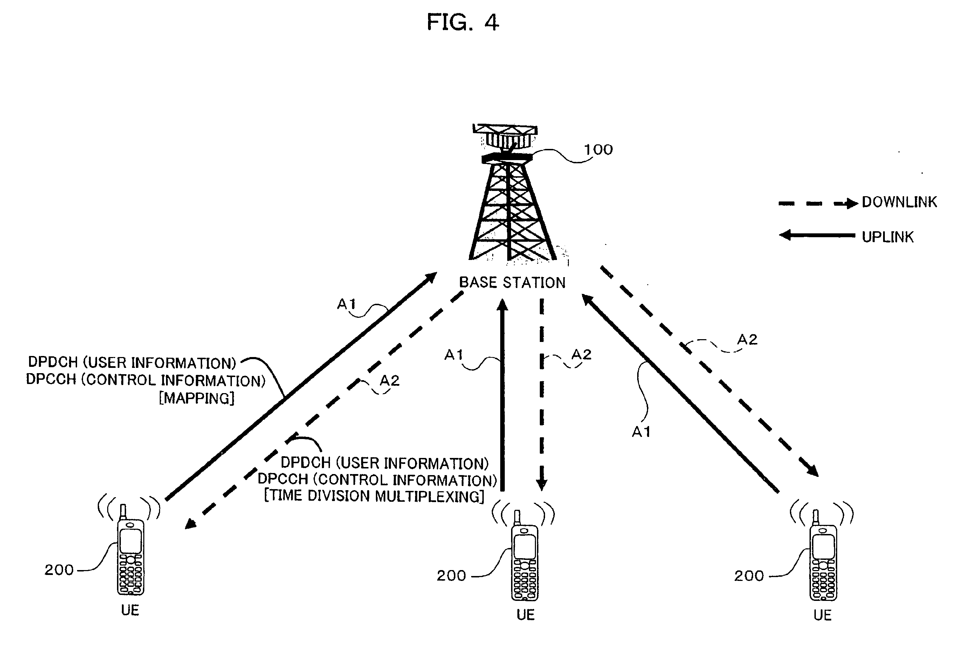

FIG. 4 is a diagram showing a concept of communications in W-CDMA. As shown in FIG. 4, radio communications are performed between a base station 100 and one or a plurality of user equipments (UE) 200 in W-CDMA.

In the uplink, DPDCH (Dedicated Physical Data Channel), which is a channel for transmitting user information, and DFCCH (Dedicated Physical Control Channel), which is a channel for transmitting control information, are mapped to in-phase components (I axis) and quadrature phase components (Q axis) of QPSK (Quadrature Phase Shift Keying), respectively, and transmitted to the base station 100 (refer to arrows A1 indicated by solid lines).

In the downlink, DPDCH and DPCCH are time-division-multiplexed, and transmitted to each UE 200 (refer to an arrow A2 indicated by a broken line). Incidentally, these links are individual channels individually assigned each UE 200, on which transmission exclusive to other UEs 200 is performed.

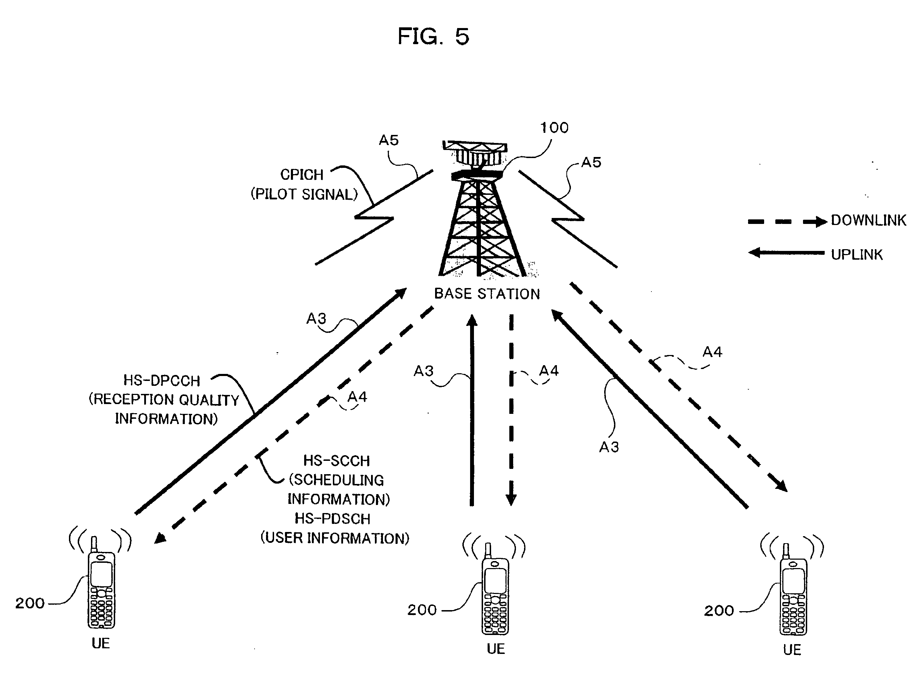

FIG. 5 is a diagram showing a concept of communications in HSPDA. As shown in FIG. 5, a communication by HSDPA is performed at the time of downlink transmission from the base station 100 to the UE 200.

The UE 200 receives a pilot signal (signal known between the base station 100 and the UE 200) transmitted over the pilot channel (CPICH: Common Pilot Channel) from the base station 100 (refer to a reference character A5), measures propagation environments, that is, a reception quality (received signal to Interference Ratio: SIR) of the downlink on the basis of the pilot signal, calculates a CQI (Channel Quality Indicator) which is reception quality information on the downlink on the basis of a result of the measurement, and notifies the base station 100 of the CQI over HS-DPCCH (High Speed Dedicated Physical Control Channel) (refer to an arrow A3 indicated by a solid line).

The base station 100 carries out scheduling to select preferentially a predetermined number of UEs 200 which are in good propagation environments on the basis of the reception quality information (CQI) on the downlinks notified from the UEs 200. When a certain UE 200 is selected in this scheduling, the base station 100 notifies this UE 200 of scheduling information (including a type of modulation, transmission amount and so forth) over HS-SCCH (High Speed Shared Control Channel) (refer to an arrow A4 indicated by a broken line). The UE 200 sets its own functions on the basis of the received scheduling information.

Thereafter, the base station 100 transmits user information to the UE 200 over a radio channel called HS-PDSCH (High Speed Physical Downlink Shared Channel) (refer to an arrow A4 indicated by a broken line). The HS-PDSCH transmitting the user information is a common channel that the UEs 200 can share, in which one time slot obtained by time-division is shared by one or a plurality of UES 200, which enables high-speed downlink access of up to 14.4 Mpbs.

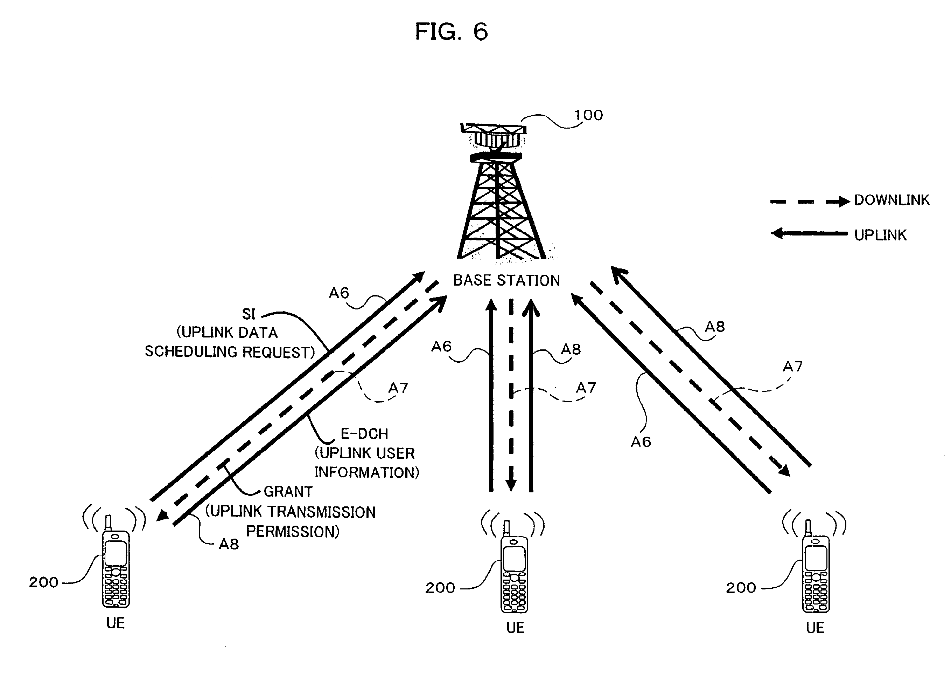

FIG. 6 is a diagram showing a concept of communications in HSUPA. As shown in FIG. 6, a communication by HSUPA is carried out at the time of uplink transmission from the UE 200 to the base station 100.

The UE 200 transmits SI (Scheduling Information) as an uplink data transmission request to the base station 100 (refer to an arrow A6 indicated by a solid line).

The base station 100 collects plural pieces of SI transmitted from the UEs 200, performs scheduling to determine transmission timing at which the UE 200 performs uplink transmission on the basis of the communication quality, the priority of uplink data and so forth of the UE 200, and transmits "Grant" as uplink transmission permission to the UE 200 (refer to an arrow A7 indicated by a broken line). Incidentally, "Grant" is categorized into two types, "absolute grant" and "relative grant." "Absolute grant" is used to notify of an uplink transmission rate at constant intervals, whereas "relative grant" is used to notify of update information about contents notified by "absolute grant."

The UEs 200 transmit user information to the base station 100 over individual channels called E-DCH (Enhanced Dedicated Channel) in the order in which the UEs 200 received uplink transmission permission obtained by receiving "Grant" from the base station 100 (refer to arrows A8 indicated by solid lines), whereby high-speed uplink access becomes feasible. Incidentally, under examination is approximately 2 to 5 Mbps of the transmission rate of E-DCH.

Meanwhile, HSDPA adopts the adaptive coding modulation, which is characterized by that the QPSK and the 16QAM are adaptively switched according to radio environments between the base station 100 and the UE 200. In order to realize the above adaptive modulation system, the CQI is defined to report reception environments from the UE 200 to the base station 100. In the CQI table, there is defined a format of different transmission rates to CQI=1 to 30, for example.

The UE 200 measures the reception environments, and reports the base station 100 of the largest CQI or a CQI smaller than the largest CQI not exceeding BLER (Block Error Rate)= 0.1 of HS-PDSCH assuming that the UE 200 having been received the HS-PDSCH within three slots preceding a slot in which the UE 200 transmits the CQI under the above environments.

In the HSUPA, the base station 100 monitors a total uplink interference amount (receive power) of UEs 200 in the service area of the base station 100, compares the receive power with a threshold value, indicates a transmission rate of an absolute value to the UE 200 by using E-AGCH (command designating an absolute value of the maximum rate), or directs the UE 200 to increase, keep or decrease the transmission rate by using E-RGCH (command designating a relative value of the maximum rate). When having uplink transmission data, the UE 200 transmits an SI (scheduling request) to the base station 100.

There are a non-patent document 1 below as the latest material with respect to physical channel and transport channel relating to W-CDMA including HSUPA, and a non-patent document 2 below as the latest material with respect to physical layer of HSUPA.
[Non-patent Document 1] 3GPP TR 25.211 Release 7 (V7.0.0)(2006-03)
[Non-patent Document 2] 3GPP TR 25.808 Release 6 (V6.0.0) (2005-03)

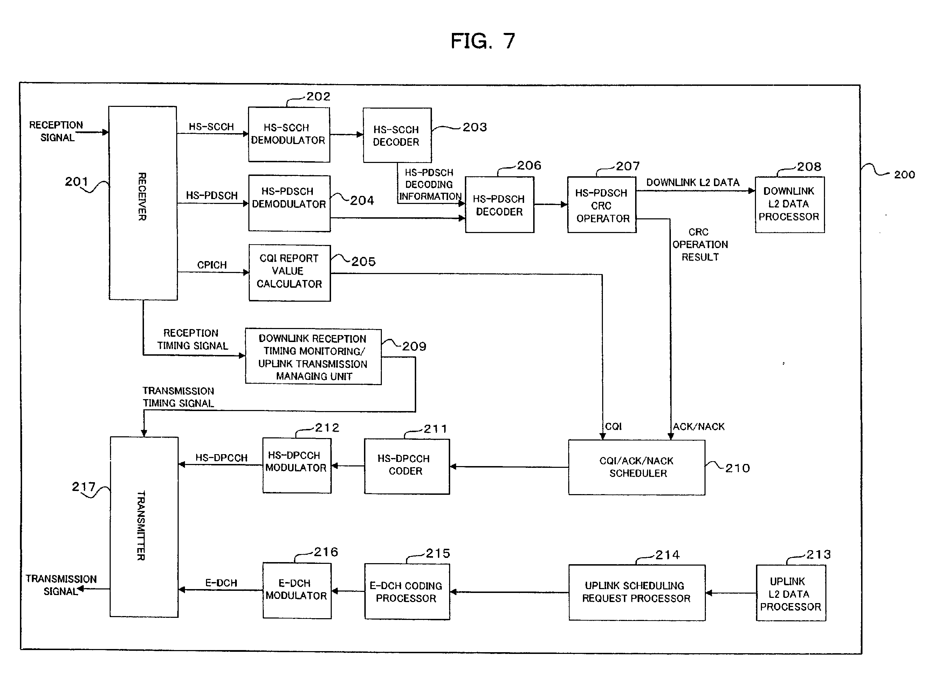

FIG. 7 shows an example of constitution of essential parts of a UE 200 having a transmitting function of the SI (scheduling request). The UE 200 shown in EIG. 7 comprises, for example, a receiver 201, an HS-SCCH demoulator 202, an HS-SCCH decoder 203, an HS-PDSCH demodulator 204, a CQI report value calculator 205, an HS-PDSCH decoder 206, an HS-PDSCH CRC operator 207, a downlink layer 2 (L2) data processor 208, a downlink reception timing monitoring/uplink transmission timing managing unit 209, a CQI/ACK/NACK scheduler 210, an HS-DPCCH coder 211, an HS-DPCCH modulator 212, an uplink layer 2 (L2) data processor 213, an uplink scheduling request processor 214, an E-DCH coding processor 215, an E-DCH modulator 216 and a transmitter 217.

In the UE 200 having the above structure, a signal received by a receiving antenna (not shown) is inputted to the receiver 201. In the receiver 201, path detection, despreading process and so forth are performed on the signal to separate it to channels of CPICH, HS-SCCH and HS-PDSCH.

The CPICH (pilot signal) among them is inputted to the CQI report value calculator 205 to be used to calculate a CQI report value. Namely, a reception SIR is measured on the basis of the received pilot signal, and a CQI of the downlink is calculated on the basis of a result of the measurement. The CQI is passed through the CQI/ACK/NACK scheduler (hereinafter, referred to simply as "scheduler" occasionally) 210, the HS-DPCCH coder 211, the HS-DPCCH modulator 212 and the transmitter 217 to be undergone the coding process, the modulation process and the radio transmission process, and notified to the base station 100 over HS-DPCCH. Incidentally, the received pilot signal is also used to determine channel estimation values of the HS-SCCH and the HS-PDSCH.

The HS-SCCH separated in the receiver 201 is compensated by using the channel estimation value obtained on the basis of the received pilot signal, demodulated by the HS-SCCH demodulator 202, and decoded by the HS-SCCH decoder 203. A result of the decoding is inputted to the HS-PDSCH decoder 206 because it includes information (coding method, coding rate, etc.) necessary to decode the HS-PDSCH.

The HS-PDSCH separated in the receiver 201 is compensated by using the channel estimation value and demodulated by the HS-PDSCH demodulator 204, decoded by the HS-PDSCH decoder 206 by using a result of the decoding fed from the HS-SCCH decoder 203, and undergone the CRC operation to be error-checked by the HS-PDSCH CRC operator 207.

Decoded data free from an error [whose result of the CRC operation is all correct (OK)] is inputted as received data of the downlink layer 2 to the L2 data processor 208, and undergone a necessary L2 data processing. The result of the CRC operation is inputted to the scheduler 210, wherein ACK information is scheduled when the result of the CRC operation is OK, or NACK information when the result of the CRC operation is no good (NG), together with the above CQI report value, passed through the HS-DPCCH coder 211, the HS-DPCCH modulator 212 and the transmitter 217 to be undergone the coding process, the modulation process and the radio transmission process, and notified to the base station 100 over the HS-DPCCH.

With respect to the uplink, when uplink L2 data to be transmitted to the base station 100 is present in the uplink L2 data processor 213, an uplink SI is generated by the uplink scheduling request processor 214, the SI is passed through the E-DCH coding processor 215, the E-DCH modulator 216 and the transmitter 217 to be undergone the coding process, the modulation process and the radio transmission process, and transmitted to the base station 100 over the E-DCH.

Meanwhile, transmission timing of the HS-DPCCH and E-DCH by the transmitter 217 is managed on the basis of transmission timing signals fed from the downlink reception timing monitoring/uplink transmission timing managing unit (hereinafter, referred to simply as "timing managing unit" occasionally) 209. Namely, the timing managing unit 209 manages transmission timing (transmission slots) of the HS-DPCCH and E-DCH on the basis of reception timing (frame timing) specified in the frame synchronization process in the receiver 201, and controls so that the transmission timing by the transmitter 217 agrees with specified timing according to the transmission timing.

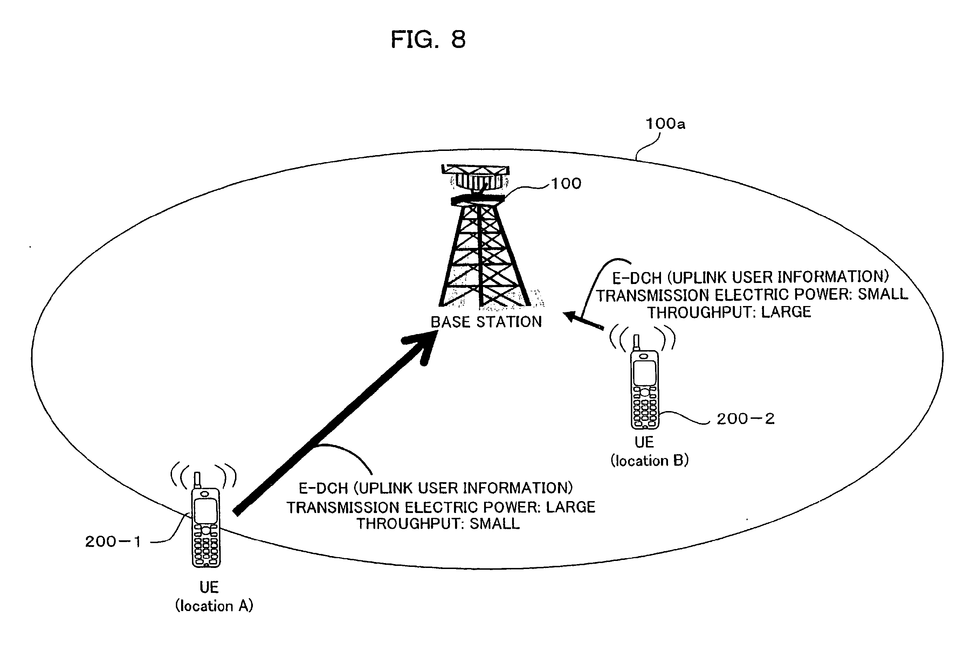

Next, description will be made of uplink transmission power-to-throughput characteristics which vary according to differences in environments such as a distance and the like between the UE 200 and the base station 100, with reference to FIG. 8. In FIG. 8, reference character 100a denotes a radio area (cell) formed by the base station 100, reference character 200-1 a UE located in a place (in the vicinity of the cell boundary: location A) far away from the base station 100, and reference character 200-2 a UE located in a place (location B) near the base station 100.

In the case where the same amount of data is regularly transmitted from each of the UE 200-1 and the UE 200-2, for example, the UE 200-2 can obtain a sufficient throughput even if the transmission electric power of E-DCH is small since a distance between the UE 200-2 and the base station 100 is small.

However, the UE 200-1 needs a higher transmission electric power of E-DCH in order to transmit uplink data to the base station 100 at a high throughput since a distance between the UE 200-1 and the base station 100 is large. For this, the UE 200-1 consumes a large electric power, and generates a large interference wave with radio communication equipments around the UE 200-1, at the same time.

As described above, in the HSUPA communication, the UEs 200 requesting for uplink data transmission transmit SIs as uplink data transmission requests to the base station 100, whereas the base station 100 collects a plurality of the SIs transmitted from the UEs 200, and performs scheduling to determine transmission timing by the UEs 200 which intend to perform uplink transmission on the basis of the communication quality, the priority of the uplink data, etc. of the UEs. Thus, it can be said that the HSUPA communication has in nature high system throughput efficiency.

However, in ordinary HSUPA communication, the base station 100 gives permission to even a UE 200 in poor reception environments which desires to perform uplink transmission when there is no other UE 200 making a transmission request, so the UE 200 initiates the communication. In a bad case, the communication is initiated in environments of a poor reception quality, the reception quality is further deteriorated thereafter, and the communication is terminated before the data transmission is completed, after all. This leads to deterioration of the power consumption efficiency of the UE 200, and causes interference with other radio communication equipments.

International patent application W02004/073337 discloses an apparatus, and an associated method, for facilitating operation of a mobile node operable in a communication system to request allocation of communication capacity upon which to communicate data pursuant to a communication service. A channel allocation request generator is selectably operable to generate requests for allocation of channel capacity upon which to communicate the data. A selector selects when to cause the generator to communicate the additional data packets. Selection is made to delay, or otherwise prevent, retransmission of requests, when a determination is made that the retransmission is unlikely to be successful.

### SUMMARY OF THE INVENTION

In the light of the above problems, an object of the present invention is to control transmission timing of a request for obtaining, from a radio base station, permission to transmit an uplink signal, thereby obtaining an expected throughput and suppress interference with other radio communication equipments while decreasing the transmission electric power of a radio terminal.

To attain the above object, the present invention is characterized by using an uplink communication method and a radio terminal in a radio communication system below.

In accordance with an embodiment of an aspect of the invention, there is provided an uplink communication method in a radio communication system comprising a radio base station and a radio terminal communicating with the radio base station, comprising the steps of estimating, in the radio terminal, a reception quality of an uplink signal at the radio base station, based on a downlink signal received from the radio base station, and controlling, in the radio terminal, a transmission timing of a transmission request to the radio base station to obtain permission to transmit the uplink signal, based on a result said estimating step, wherein in said controlling step, a current uplink transmission electric power value is monitored in said radio terminal, wherein the transmission request is transmitted from said radio terminal when the monitored transmission electric power value is below a predetermined transmission electric power threshold value, while transmission of the transmission request from said radio terminal is deferred when the monitored transmission electric power value is equal to or greater than the transmission electric power threshold value.

In accordance with an embodiment of an aspect of the invention, there is provided a radio terminal for use in a radio communication system comprising a radio base station with which the radio terminal is configured to communicate by radio, the radio terminal comprising a transmitting means for transmitting a transmission request for permission to transmit an uplink signal to the radio base station, an uplink reception quality estimating means for estimating a reception quality of the uplink signal at the radio base station based on a downlink signal received from the radio base station, and an uplink transmission timing controlling means for controlling the transmitting means based on a result of the estimation by the up reception quality estimating means to control transmission timing for the transmission request to the radio base station, wherein the uplink transmission timing controlling means further comprises a transmission electric power value monitoring unit for monitoring a current uplink transmission electric power value, and a transmission electric power determining unit for determining whether the monitored transmission electric power value is below a predetermined transmission electric power threshold value, and wherein said uplink transmission timing controlling unit is configured to control said transmitting means to transmit the transmission request when the monitored transmission electric power is below the predetermined transmission electric power threshold value, and to defer transmission of the transmission request when the monitored transmission electric power is equal to or greater than the transmission electric power threshold value.

In one embodiment, the uplink transmission timing controlling means is configured to control the transmitting means to transmit the transmission request when the result of the estimation is equal to or greater than a predetermined uplink quality threshold value, and to defer transmission of the transmission request when the result of the estimation is below the uplink quality threshold value.

In one embodiment, the uplink transmission timing controlling means further comprises a waiting time monitoring unit for monitoring a waiting time for transmission of the deferred transmission request, and a waiting time determining unit for determining whether the waiting time monitored by the waiting time monitoring unit exceeds a predetermined time period, wherein the uplink transmission timing controlling means is configured to control the transmitting means to transmit the transmission request when the waiting time determining unit determines that the waiting time exceeds the predetermined time period.

In one embodiment, the uplink transmission timing controlling means may further comprise a battery remaining quantity monitoring unit for monitoring a battery remaining quantity, and a battery remaining quantity determining unit for determining whether a result of the monitoring by the battery remaining quantity monitoring unit is equal to or greater than a predetermined battery threshold value, wherein the uplink transmission timing controlling means is configured to control the transmitting means to transmit the transmission request when the battery remaining quantity determining unit determines that the result of monitoring is equal to or greater than the battery threshold value.

In one embodiment, the uplink transmission timing controlling means may further comprise a battery remaining quantity monitoring unit for monitoring a battery remaining quantity, wherein the uplink transmission timing controlling means is configured to control the result of estimation such that the smaller the monitored battery remaining quantity, the harder the transmission request is transmitted.

In one embodiment, the uplink transmission timing controlling means may further comprise an inputting unit for accepting input information about the transmission timing from a user of the radio terminal, wherein the uplink transmission timing controlling means is configured to control the transmission timing based on the input information inputted through the inputting unit.

The present invention provides at least any one of effects and advantages below:
(1) The radio terminal estimates a reception quality of an uplink signal at the radio base station (hereinafter referred to simply as "base station") based on the downlink signal received from the base station, and controls transmission timing of a transmission request to the base station to obtain permission to transmit the uplink signal based on the result of the estimation. Whereby, transmission of the transmission request of the uplink signal can be waited when reception environments at the base station are estimated to be poor, and the transmission request can be transmitted when the reception environments at the base station are estimated to be good. Accordingly, it is possible to suppress a transmission electric power of the radio terminal to low, obtain an expected throughput, and reduce interference with other radio communication equipments.
(2) A transmission electric power of the current uplink signal is monitored to determine whether to issue the transmission request of the uplink signal according to a result of the monitoring. This enables a reduction power consumption of the radio terminal.
(3) When a waiting time of the uplink signal exceeds a predetermined time period, it is possible to decide to issue a transmission request. Whereby, it becomes possible to avoid a case where the transmission request is not transmitted indefinitely, thus a communication is not initiated, after all.
(4) The transmission timing can be controlled based on input information relating to transmission timing of the transmission request from the user through the inputting unit. Accordingly, it is possible to appropriately change the transmission timing of the transmission request according to convenience (will) of the user, which leads to improvement of utility for the user.
(5) A battery remaining quantity of the radio terminal is monitored, and the smaller the battery remaining quantity, the harder the transmission request is transmitted. This is helpful to further reduce the power consumption of the radio terminal.

The above and other objects and features of the present invention will be understood by reading carefully the following description with accompanying drawings. Preferred embodiments of the present invention will be described in more detail referring to the accompanying drawings. The drawings are illustrative and are not to be limitative of the scope of the present invention.

### BRIEF DESCRIPTION OF THE DRAWINGS

FIG. 1 is a diagram schematically showing a structure of a mobile communication system according to an embodiment of this invention;
FIG. 2 is a block diagram showing an essential structure of a radio terminal (UE) shown in FIG. 1;
FIG. 3 is a flowchart for illustrating an operation of the UE shown in FIG. 2 at the time of uplink communication;
FIG. 4 is a diagram showing a concept of communications in W-CDMA;
FIG. 5 is a diagram showing a concept of communications in HSDPA;
FIG. 6 is a diagram showing a concept of communications in HSUPA;
FIG. 7 is a block diagram showing an example of an essential structure having an SI (scheduling request) transmitting function in the HSUPA communication; and
FIG. 8 is a diagram showing a concept of transmission electric power characteristics in environments of the UE.

### DESCRIPTION OF THE PREFERRED EMBODIMENTS

Preferred embodiments of the present invention are described in more detail below referring to the accompanying drawings.

### [A] Explanation of Outline

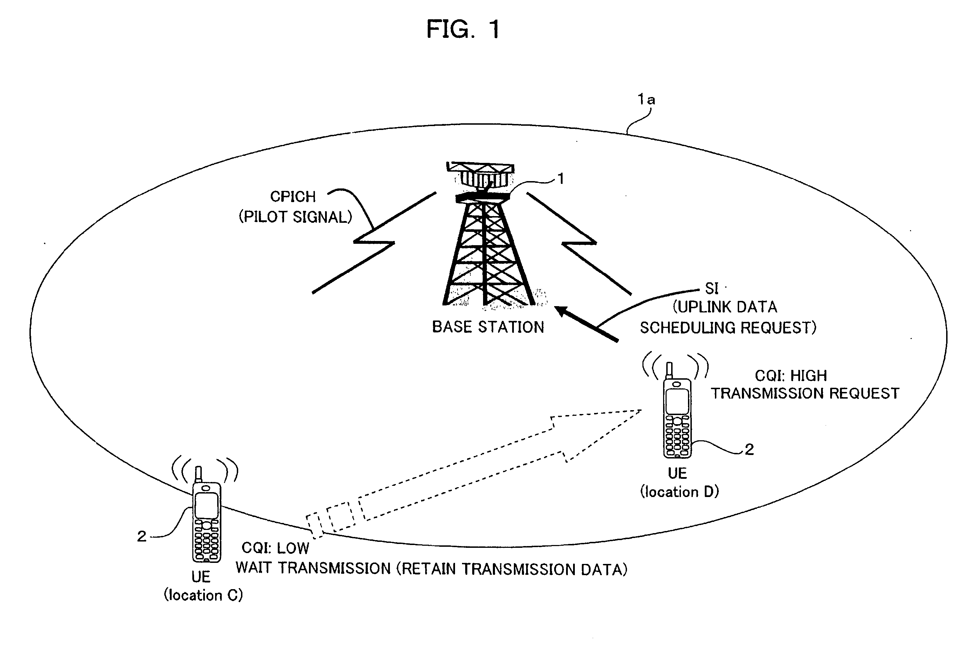

FIG. 1 is a diagram schematically showing a structure of a mobile communication system according to an embodiment of this invention. The mobile communication system shown in FIG. 1 comprises a radio base station (BTS: Base Transceiver Station) 1, and a mobile station (MS: Mobile Station) as being a radio (user) terminal (UE) such as a cellular phone being capable of radio communication with the BTS 1 within a radio area (cell) 1a formed by the BTS 1. In this embodiment, it is assumed that downlink communication from the BTS 1 to the MS (occasionally referred to as UE) 2 is performed in HSDPA, whereas uplink communication from the MS 2 to the BTS 1 is performed in HSUPA. Incidentally, the number of the BTSs 1 may be one or more, as well as the MSs 2.

The reception quality at the BTS 1 of transmission data (hereinafter referred to as uplink transmission data or uplink data occasionally) in the uplink (E-DCH) from the UE 2 to the BTS 1 tends to be deteriorated due to effects by multi-path environments such as a distance between the UE 2 and the BTS 1, buildings near the UE 2, etc, in general. Similarly, the reception quality at the UE 2 of data in the downlink tends to be deteriorated due to effects of multi-path environments such as a distance between the BTS 1 and the UE 2, etc. Accordingly, it is possible to estimate the reception quality at the BTS 1 of data (user information) in the uplink (E-DCH) on the basis of a CQI report value representing the reception quality of the HS-PDSCH in the downlink, for example.

Therefore, the UE 2 located in a place (location) C away from the BTS 1 such as a place on the cell boundary shown in FIG. 1 refers to a CQI representing the reception environments of the downlink. When the CQI is low, the UE 2 stores (holds) uplink transmission data in a memory or the like thereof, waits to transmit an uplink data scheduling request (SI). When moving to a place where the CQI is high such as a place (location) D near the BTS 1, the UE 2 transmits the uplink data scheduling request (SI) to transmit a request of the uplink transmission data stored in the memory.

As this, when the UE 2 has uplink transmission data to be transmitted to the BTS 1, the UE 2 estimates the reception environments at the BTS 1 at the time of E-DCH transmission on the basis of the CQI. When determining that the reception environments at the BTS 1 are poor, the UE 2 stores the uplink transmission data in a memory or the like thereof, and waits to transmit the SI. When estimating that the reception environments at the BTS 1 are good, the UE 2 transmits the SI. Whereby, it is possible to hold down the transmission electric power of the UE 2, and obtain an expected throughput. It is also possible to reduce the interference with other radio communication equipments.

In the known technique, when the UE has an uplink data to be transmitted to the BTS 1, the UE 2 transmits an SI to the BTS 1 even in environments where the UE 2 needs a large electric power to transmit E-DCH to the BTS 1 because the UE 2 is in a place away from the BTS 1 such as a location C.

Hereinafter, description will be made of an example where the UE 2 having the above SI transmission/wait controlling function is realized.

### [B] Description of UE 2

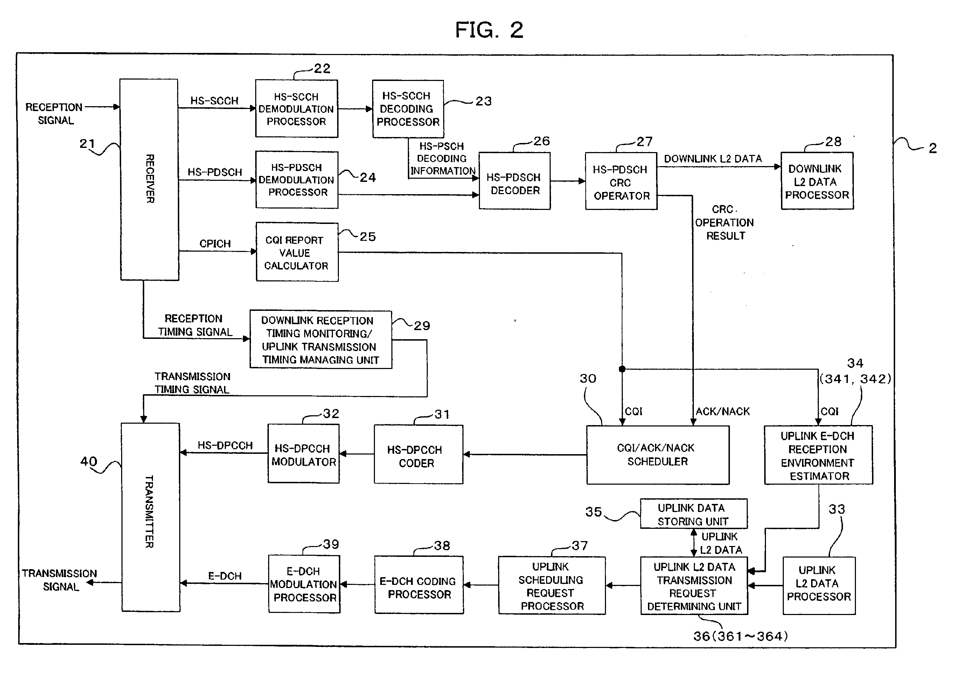

FIG. 2 is a block diagram where attention is given to essential constitution of the above UE 2. The UE 2 shown in FIG. 2 comprises, for example, a receiver 21, an HS-SCCH modulation processor 22, an HS-SCCH decoding processor 23, an HS-PDSCH demodulation processor 24, a CQI report value calculator 25, an HS-PDSCH decoder 26, an HS-FDSCH CRC operator 27, a downlink L2 (Layer 2) data processor 28, a downlink reception timing monitoring/uplink transmission managing unit 29, a CQI/ACK/NACK scheduler 30, an HS-DPCCH coder 31, an HS-DPCCH modulator 32, an uplink L2 data processor 33, an uplink E-DCH reception environment estimator 34, a memory (uplink data storing unit) 35, an uplink L2 data transmission request determining unit 36, an uplink scheduling request processor 37, an E-DCH coding processor 38, an E-DCH modulation processor 39 and a transmitter 40.

The above parts 21 through 33 and 37 through 40 excepting the uplink E-DCH reception environment estimator 34, the uplink data storing unit 35 and the uplink L2 data transmission request determining unit 36 have functions equivalent to those of the parts 201 through 217 described above with reference to FIG. 7, respectively.

The receiver 21 performs the path detection, the despreading process and so forth based on a signal received by a receiving antenna (not shown), and separates the received signal to channels (signals) of CPICH, HS-SCCH and HS-PDSCH. The HS-SCCH demodulation processor 22 compensates the above received HS-SCCH on the basis of a channel estimation value of the downlink determined from the above CPICH (pilot signal), then demodulates the signal in a demodulation method corresponding to a modulation method (multi-value modulation method such as QPSK; the same will be applied hereinafter) on the transmitting side (BTS 1). The HS-SCCH decoding processor 23 decodes the signal demodulated by the HS-SCCH demodulation processor 22 in a decoding method corresponding to a coding method (error correction coding method such as convolutional coding, turbo coding and the like; the same will be applied hereinafter) on the transmitting side. Since, a result of this decoding includes information (coding method, coding rate, etc.) necessary for demodulation of the HS-PDSCH, the result is supplied to the HS-PDSCH decoder 26.

The CQI report value calculator 25 calculates a CQI report value (hereinafter referred to simply as "CQI", occasionally) on the basis of the received pilot signal. For example, the CQI report value calculator 25 can measure a received SIR of the downlink on the basis of the received pilot signal, and calculate a CQI report value of the downlink on the basis of a result of this measurement. The calculated CQI is supplied to both the CQI/ACK/NACK scheduler 30 and the uplink E-DCH reception environment estimator 34.

The HS-PDSCH demodulation processor 24 compensates the received HS-PDSCH separated by the receiver 21 by using the channel estimation value, then demodulates it in a demodulation method corresponding to the modulation method on the transmitting side (BTS 1). The HS-PDSCH decoder 26 decodes the demodulated signal by using the result of demodulation fed from the HS-SCCH decoding processor 23. The HS-PDSCH CRC operator 27 performs the CRC operation on a result of the decoding to check an error, whereby decoded data free of an error [whose result of the CRC operation is all correct (OK)] is outputted as received data of the downlink layer 2 to the downlink L2 data processor 28. Incidentally, a result of this CRC operation is also inputted to the scheduler 30, in which transmission timing of ACK information or NACK information to the BTS 1 is scheduled together with the CQI report value calculated by the CQI report value calculator 25.

The downlink L2 data processor 28 performs a necessary process of Layer 2 on decoded data (downlink L2 data) the result of CRC operation on which is OK.

The downlink reception timing monitoring/uplink transmission managing unit (hereinafter referred to simply as "timing managing unit") 29 manages transmission timing (transmission slot) of the uplink channels (HS-DPCCH and E-DCH) on the basis of reception timing (frame timing) specified in the frame synchronization process by the receiver 21, and controls according to the transmission timing so that the transmission timing by the transmitter 40 is specified timing.

The CQI/ACK/NACK scheduler (hereinafter, referred to simply as "scheduler") 30 schedules the transmission timing of the CQI report value calculated by the CQI report value calculator 25 and the ACK/NACK information according to the result of CRC operation to the BTS 1. The HS-DPCCH coder 31 encodes information scheduled by the scheduler 30 and to be transmitted over the HS-DPCCH in a necessary coding method (error correction coding method). The HS-DPCCH modulator 32 modulates the coded information in a necessary modulation method.

The uplink L2 data processor 33 generates and processes uplink data of Layer 2 to be transmitted to the BTS 1. The uplink L2 data scheduling request processor 37 generates and processes an uplink scheduling request (SI) to be transmitted to the BTS 1 over the E-DCH when the uplink L2 data transmission request determining unit (hereinafter, referred to simply as "transmission request determining unit") 36 to be described later determines that the uplink scheduling request (SI) is transmitted to the BTS 1.

The E-DCH coding processor 38 encodes the SI fed from the uplink scheduling request processor 37 as information on the E-DCH in a necessary coding method. The E-DCH modulation processor 39 modulates the encoded information in a necessary modulation system.

The transmitter 40 performs necessary radio transmission processes such as DA (Digital to Analog) conversion, frequency conversion to a radio frequency (RF) (up-conversion) and so forth on modulated signals on the HS-DPCCH and E-DCH obtained by the HS-DPCCH modulator 32 and the E-DCH modulation processor 39, respectively, and transmits the signals on the channels of the uplink from a transmitting antenna (not shown) to the BTS 1 according to the transmission timing signals from the timing managing unit 29.

Namely, the uplink scheduling request processor 37, the E-DCH coding processor 38, the E-DCH modulation processor 39 and the transmitter 40 together function as a transmitting means which can transmit a transmit request (SI) for obtaining transmission permission ("Grant") of an uplink signal to the BTS 1.

The uplink E-DCH reception timing environment estimator (uplink reception quality estimating means) 34 estimates a reception quality of an uplink signal at the BTS 1 on the basis of a downlink signal received from the BTS 1. In this embodiment, the uplink E-DCH reception environment estimator 34 estimates reception environments (quality) of the uplink (E-DCH) at the BTS 1 on the basis of the CQI report value of the downlink calculated by the CQI report value calculator 25. For example, it is possible to estimate a transmission throughput of the E-DPDCH (physical channel relative to E-DCH which is a logical channel), that is, reception environments (quality) of the E-DPDCH at the BTS 1, on the basis of a table 1 below in which a CQI is correlated to at least a reception throughput (kbps) of the HS-PDSCH at the UE (MS) 2.

Namely, the CQI report value is a value that assures 90% [block error rate (BLER) = 0. 1] of a reception throughput of the UE 2 to a transport block size of HS-PDSCH corresponding to the CQI report value that the BTS 1 transmits (refer to a table 1 below). Since communication environments of E-DPDCH of the uplink are assumed to have high correlation with communication environments of HS-PDSCH of the downlink, it is possible to assume that the transmission throughput of E-DPDCH of the uplink of the UE 2 is equivalent to the reception throughput of HS-PDSCH of the downlink (that is, finally, it becomes possible to estimate a corresponding CQI from the table 1 below).

With respect to the CQI, a value obtained by averaging values over a certain period cf time may be used as a base of the above determination reference. In which case, the uplink E-DCH reception environment estimator 34 has an averaging process functioning unit 341 (refer to FIG. 2) which averages CQIs calculated by the CQI report value calculator 25 over a certain period of time.

**[Table 1]**

| CQI to HS-PDSCH MS reception throughput | | | |
|---|---|---|---|
| CQI | transport block size | HS-PDSCH BTS transmission rate [kbps] | HS-PDSCH MS reception throughput [kbps] |
| 1 | 137 | 69 | 62 |
| 2 | 173 | 87 | 78 |
| 3 | 233 | 117 | 105 |
| 4 | 317 | 159 | 143 |
| 5 | 377 | 189 | 170 |
| 6 | 461 | 231 | 207 |
| 7 | 650 | 325 | 293 |
| 8 | 792 | 396 | 356 |
| 9 | 931 | 466 | 419 |
| 10 | 1262 | 631 | 568 |
| 11 | 1483 | 742 | 667 |
| 12 | 1742 | 871 | 784 |
| 13 | 2279 | 1140 | 1026 |
| 14 | 2583 | 1292 | 1162 |
| 15 | 3319 | 1660 | 1494 |
| 16 | 3565 | 1783 | 1604 |
| 17 | 4189 | 2095 | 1885 |
| 18 | 4664 | 2332 | 2099 |
| 19 | 5287 | 2644 | 2379 |
| 20 | 5887 | 2944 | 2649 |
| 21 | 6554 | 3277 | 2949 |
| 22 | 7168 | 3584 | 3226 |
| 23 | 9719 | 4860 | 4374 |
| 24 | 11418 | 5709 | 5138 |
| 25 | 14411 | 7206 | 6485 |
| 26 | 17237 | 8619 | 7757 |
| 27 | 21754 | 10877 | 9789 |
| 28 | 23370 | 11685 | 10517 |
| 29 | 24222 | 12111 | 10900 |
| 30 | 25558 | 12779 | 11501 |

In other words, the E-DCH reception environment estimator 34 of this embodiment has a function as a CQI estimating unit 342 (refer to FIG. 2) which determines a CQI, which is reception quality information on a downlink signal, as a result of estimation of the reception quality of an uplink signal. Further, the CQI estimating unit 342 has functions as an uplink transmission data speed estimating unit which estimates a transmission data speed (transmission throughput) of a transmittable uplink signal on the basis of a reception data speed (reception throughput) of the downlink signal, and a converting unit which converts the transmission data speed estimated by the uplink transmission data speed estimating unit to a corresponding CQI in the above table 1. The table 1 is retained as data in a table form in an integrated memory or the like not shown of the E-DCH reception environment estimator 34, for example.

When uplink transmission data fed from the uplink L2 data processor 33 is present, the transmission request determining unit 36 determines (decides) on the basis of at least a result of the estimation by the uplink E-DCH reception environment estimator 34 whether to issue an uplink scheduling request (SI) (hereinafter referred to as uplink transmission request, occasionally) to the BTS 1. For example, when the transmission throughput of E-DCH is assumed to be below a predetermined threshold value (for example, 200 kbps) by the uplink E-DCH reception environment estimator 34 (that is, when CQI = 1 to 5 in the table 1), the transmission request determining unit 36 determines not to issue an uplink transmission request, as shown in table 2 below. In cases excepting the above case (in the case where CQI = 6 to 30 in the table 1), the transmission request determining unit 36 determines to issue the uplink transmission request. Incidentally, the above threshold value is defined and set in a view point that the throughput is sufficient to complete normally the communication.

**[Table 2]**

| Example of determination reference of uplink transmission request | |
|---|---|
| CQI | Uplink transmission request |
| 1-5 | not issued |
| 6-30 | issued |

The uplink data storing unit (signal retaining unit) 35 temporarily holds uplink transmission data, the uplink transmission request of which is determined not to be made (to be waited) by the transmission request determining unit 36.

Namely, the uplink data storing unit 35 and the transmission request determining unit 36 of this embodiment together function as an uplink transmission timing controlling means which controls the above parts 37 to 39 and the transmitter 40 as being the above transmitting means on the basis of a result of estimation by the uplink E-DCH reception environment estimator 34 to control uplink transmission timing of an uplink SI to the BTS 1.

Note that the transmission request determining unit 36 of this embodiment may selectively and additionally have functions below (refer to FIG. 2)
(1) an uplink transmission electric power monitoring function unit 361 which monitors a transmission electric power of the uplink (DPDCH), and adds a result of the monitoring as an element of the above determination reference (reference to decide whether to issue an uplink transmission request) (for example, deciding to issue an uplink transmission request when the transmission electric power is not the maximum electric power);
(2) a timer function unit 362 which monitors a time period for which uplink data is stored in the uplink data storing unit 35, and adds a result of the monitoring as an element of the above determination reference (for example, determining to issue an uplink transmission request when the storing time exceeds a predetermined time period (transmission limit time period);
(3) a user interface function unit (inputting unit) 363 which accepts a determination condition relating to an uplink transmission request from a user of the UE 2 (that is, input information relating to transmission timing of the uplink transmission request such as whether the uplink transmission request can be waited, the above transmission limit time period or the like), and adds it as an element of the determination reference; and
(4) a battery monitoring function unit 364 which monitors a remaining quantity of a battery of the UE 2, and adds a result of the monitoring as an element of the determination reference (for example, the smaller the remaining quantity of the battery, the harder the uplink transmission request is transmitted).

Now, description will be made in more detail an operation of the UE 2 having the above structure according to this embodiment.

### (B1) Explanation of Whole Operation

In the UE 2 having the above structure, a signal received by the receiving antenna is inputted to the receiver 21. In the receiver 21, path detection, despreading process and so forth are performed on the signal to separate it into channels of CPICH, HS-SCCH and HS-PDSCH.

The CPICH (pilot signal) among them is inputted to the CQI report value calculator 25, and used to calculate a CQI report value. Namely, a received SIR of the downlink is measured on the basis of the received pilot signal, and a CQI of the downlink is calculated on the basis of a result of the measurement. The CQI is routed through the scheduler 30, the HS-DPCCH coder 31, the HS-DPCCH modulator 32 and the transmitter 40 to be undergone the coding process, the modulation process and the radio transmission process, and notified to the BTS 1 over HS-DPCCH.

The HS-SCCH separated by the receiver 21 is compensated by using a channel estimation value obtained on the basis of the received pilot signal and demodulated by the HS-SCCH demodulation processor 22, then decoded by the HS-SCCH decoding processor 23. A result of the decoding is inputted to the HS-PDSCH decoder 26 because the result includes information (coding method, coding rate and so forth) necessary to decode the HS-PDSCH.

The HS-PDSCH separated by the receiver 21 is compensated by using the channel estimation value and demodulated by the HS-PDSCH demodulation processor 24, decoded by using the decoding result fed from the HS-SCCH decoding processor 23 by the HS-PDSCH decoder 26, and undergone the CRC operation to be error-checked or the HS-PDSCH CRC operator 27.

As a result, decoded data free of an error (a result of the CRC operation thereon being OK) is inputted as received data of the downlink Layer 2 to the downlink L2 data processor 28, and undergone a necessary L2 data processing. A result of the CRC operation is inputted to the scheduler 30.

The scheduler 30 schedules ACK information when a result of the CRC operation is OK, or NACK information when a result of the CRC operation is NG, together with the above CQI report value. The scheduled information is passed through the HS-DPCCH coder 31, the HS-DPCCH modulator 32 and the transmitter 40 to be undergone the coding process, the modulation process and the radio transmission process, and notified to the BTS 1 over the HS-DPCCH.

The uplink E-DCH reception environment estimator 34 estimates reception environments of the uplink E-DCH on the basis of the above CQI as described above with reference to the table 1. A result of the estimation is provided to the transmission request determining unit 36.

With respect to the uplink, when any uplink transmission data to be transmitted to the BTS1 is present in the uplink L2 data processor 33, the transmission request determining unit 36 determines (decides) whether to transmit an uplink transmission request (SI) or to wait transmission of the uplink transmission request (SI) on the basis of at least the estimation result. When the transmission request determining unit 36 decides to transmit, the uplink scheduling request processor 37 generates an uplink SI. The uplink SI is passed through the E-DCH coding processor 38, the E-DCH modulation processor 39 and the transmitter 40 to be undergone the coding process, the modulation process and the radio transmission process, and transmitted to the BTS 1 over the E-DCH according to a transmission timing signal fed from the timing managing unit 29. To the contrary, when the transmission determining unit 33 decides to wait transmission of the SI, the uplink data is held in the uplink data storing unit 35.

### (B2) Explanation of Uplink Transmission Request Determination Operation

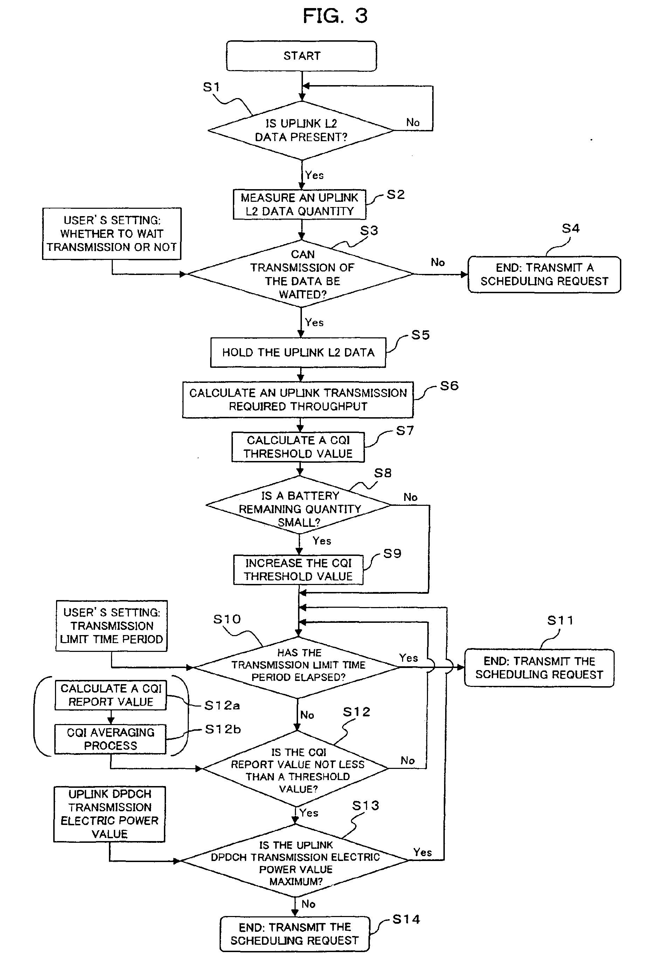

Next, description will be made of a determining method (operation of determining transmission/wait of the uplink transmission request) by the transmission request determining unit 36 with reference to a flowchart shown in FIG. 3.

As shown in FIG. 3, the transmission request determining unit 36 monitors presence/absence of uplink transmission data to be transmitted from the uplink L2 data processor 33 (No route at step S1). When uplink transmission data is present (when Yes at step S1), the transmission request determining unit 36 measures an amount of the uplink transmission data (step S2) to determine whether transmission of the up transmission data can be waited (step S3).

Namely, the transmission request determining unit 36 determines whether to transmit or wait according to setting information on the data (such as an E-mail in a large amount) by the user representing whether the user desires to immediately transmit it or the user can wait to transmit it. The setting information can be input, accepted and set by that the use interface function unit 363 displays a screen that prompts the user to input the setting information on a display (display unit: not shown) of the UE 2, for example.

When it is determined as a result of the determination that transmission of the data cannot be waited (that is, data is to be immediately transmitted) (when No at step S3), the transmission request determining unit 36 directs the uplink scheduling request processor 37 to transmit an uplink SI. Whereby, the uplink SI is transmitted to the BTS 1 via the uplink scheduling request processor 37, the E-DCH coding processor 38, the E-DCH modulation processor 39 and the transmitter 40 (step S4).

When it is determined that transmission of the uplink transmission data can be waited (when Yes at step S3), the transmission request determining unit 36 holds the uplink transmission data in the uplink data storing unit 35 (step S5), calculates a transmission throughput necessary for the uplink transmission on the basis of the measured data amount (step S6), and determines a CQI corresponding to this transmission throughput as a CQI threshold value (that is, CQI which is a boundary value used as the determination reference in the table 2: uplink quality threshold value) from the table 1 (step S7).

The transmission request determining unit 36 further determines whether the current battery remaining quantity is less than a predetermined threshold value (battery threshold value) and is thus small, by means of the battery monitoring function unit 364 (step S8). When the current battery remaining quantity is small (when Yes at step S8), the transmission request determining unit 36 increases the CQI threshold value by a predetermined number (or by one, or by two or more at a time) (step S9). This means that the transmission request determining unit 36 controls to increase the range of the CQI, at which the up transmission request is not issued in the table 2, when the battery remaining quantity is small so that the smaller the battery remaining quantity, the harder the uplink transmission request is transmitted (that is, the chance to transmit the uplink transmission request is lessened). Incidentally, when the battery remaining quantity is sufficiently large, the process of increasing the CQI threshold value is not carried out (No route at step S8).

Namely, the transmission request determining unit 36 has functions as both a battery remaining quantity monitoring unit which monitors the battery remaining quantity, and a battery remaining quantity determining unit which determines whether a result of the monitoring by the battery remaining quantity monitoring unit is not less than a predetermined battery threshold value. When the battery remaining quantity determining unit determines that a result of the monitoring is not less than the battery threshold value, the transmission request determining unit 36 controls so that the transmitting means 37 through 40 can transmit the uplink transmission request.

The transmission request determining unit 36 then determines by means of the timer function unit 362 whether the storing time of the uplink transmission data stored in the uplink data storing unit 35 exceeds a transmission limit time period or not (step S10). The transmission limit time period can be input, accepted and set by displaying an input display of a time period that the user can wait accompanying the screen display prompting the user to input the setting information as described above at step S3 by means of the user interface function unit 363. Alternatively, the transmission limit time period may be set at different timing, or fixedly set.

When the storing time exceeds the transmission limit time period (when Yes at step S10), the transmission request determining unit 36 directs the uplink scheduling request processor 37 to transmit an uplink SI, whereby the uplink SI is transmitted to the BTS 1 via the uplink scheduling request processor 37, the E-DCH coding processor 38, the E-DCH modulation processor 39 and the transmitter 40 (Step S11).

Namely, the transmission request determining unit 36 (timer function unit 362) has functions as both a wait time monitoring unit which monitors a wait time when the uplink transmission request is waited, and a wait time determining unit which determines whether the wait time monitored by the wait time monitoring unit exceeds a predetermined time period (transmission limit time period). When the wait time determining unit determines that the wait time exceeds the transmission limit time period, the transmission request determining unit 36 controls so that the transmitting means 37 through 40 transmit the uplink transmission request.

When the storing time does not exceed the transmission limit time period (when No at step S10), the transmission request determining unit 36 compares the CQI report value calculated by the CQI report value calculator 25 with the CQI threshold value, and determines whether the calculated CQI report value is not less than the CQI threshold value (step S12). The CQI report value to be compared may be an averaged value by an averaging process function unit 341 (steps S12a and S12b).

When the calculated CQI report value is below the CQI threshold value, as a result, the transmission request determining unit 36 continuously monitors whether the transmission limit time period has elapsed or not (No route at step S12). When the CQI report value is not less than the CQI threshold value (when Yes at step S12), the uplink transmission electric power monitoring function unit 361 determines whether the current transmission electric power value for the uplink DPDCH is equal to a predetermined transmission electric power threshold value (for example, the maximum electric power value) (step S13).

When the current transmission electric power value of the uplink DPDCH is equal to the transmission electric power threshold value (the maximum electric power value) (when Yes at step S13), the transmission request determining unit 36 continuously monitors whether the transmission limit time period has elapsed or not. When not (when No at step S13), the transmission request determining unit 36 directs the uplink scheduling request processor 37 to transmit an uplink SI, whereby the uplink SI is transmitted to the BTS 1 via the uplink scheduling request processor 37, the E-DCH coding processor 38, the E-DCH modulation processor 39 and the transmitter 40 (step S14).

Namely, the uplink transmission electric power monitoring function unit 361 has functions as both a transmission electric power value monitoring unit which monitors the current uplink transmission electric power value, and a transmission electric power determining unit which determines whether a result of the monitoring by the transmission electric power value monitoring unit is below a predetermined transmission electric power threshold value or not. The uplink transmission electric power monitoring unit 361 controls the transmitting means 37 through 40 so that the transmission request is transmitted when the transmission electric power determining unit determines that a result of the monitoring is below the transmission electric power threshold value, or transmission of the transmission request is waited when the result of the monitoring is not less than the transmission electric power threshold value.

According to this embodiment, in HUSPA, when the UE 2 has uplink transmission data, the UE 2 estimates reception environments at the BTS 1 at the time of uplink (E-DCH) transmission. When the UE 2 determines that the reception environments at the BTS 1 are poor, the UE 2 stores the uplink transmission data in the memory 35 to wait transmission of an uplink SI. When the UE 2 estimates the reception environments of the BTS 1 are good, the UE 2 transmits the uplink SI. This contributes to hold down the transmission electric power of the UE 2, obtain an expected throughput, prevent interference with other radio communication equipments.

In the embodiment described above, it becomes possible to monitor the transmission electric power of the uplink (DPDCH) by providing the uplink transmission electric power monitoring function unit 361 to determine whether to transmit the uplink transmission request according to a result of the monitoring, which contributes to decrease the power consumption of the UE 2.

By providing the timer function unit 362, it becomes possible to monitor the storing time of the uplink transmission data stored in the memory 35, and determine to transmit the uplink transmission request when the storing time exceeds a predetermined time period (transmission limit time period). Accordingly, it is possible to avoid a case where the uplink transmission request is not transmitted indefinitely, thus the transmission is not initiated.

By providing the averaging process function unit 341, the CQIs obtained for a certain period of time are averaged and used as a base of the determination reference. This is helpful to determine transmission of the uplink transmission request on the basis af a CQI value stable in respect to time, whereby the UE 2 can initiate and realize an uplink communication in stable communication environments.

By providing the user interface function unit 363, it becomes possible to accept a determination condition (for example, whether transmission of the uplink transmission request can be waited or not, the transmission limit time period or the like) relating to the uplink transmission request from the user of the UE 2, and add it as an element of the determination reference. Whereby, it becomes possible to appropriately change transmission timing of the uplink transmission request according to convenience (will) of the user, which improves utility for the user.

By providing the battery monitoring function unit 364, it becomes possible to monitor a battery remaining quantity of the UE 2. Therefore, the smaller the battery remaining quantity, the harder the uplink transmission request is transmitted. This makes it possible to further decrease the power consumption of the UE 2.

In the above embodiment, performed are all the determinations on whether the data is data whose transmission can be waited (step S3), whether the battery remaining quantity is small (step S8), whether the storing time of uplink transmission data exceeds the transmission limit time period (step S10) and whether the transmission electric power value of uplink DPDCH is below the threshold value (step S13). However, any one or a plurality of them can be omitted.

According to the present invention, the radio terminal controls transmission timing of a transmission request so as to wait transmission of the transmission request of an uplink signal when it is determined that reception environments at the base station are poor, or transmit the transmission request when the reception environments at the base station are good, as described above in detail. Whereby, it is possible to hold down the transmission electric power of the radio terminal, obtain an expected throughput, and reduce interference with other radio communication equipments. Thus, this invention is very useful in the radio communication technical field.

As this invention may be embodied in several forms, the present embodiments are therefore illustrative and not restrictive, since the scope of the invention is defined by the appended claims rather than by the description preceding them, and all changes that fall within metes and bounds of the claims are therefore intended to be embraced by the claims.

## Claims

1. An uplink communication method in a radio communication system comprising a radio base station (1) and a radio terminal (2) communicating with said radio base station (1), comprising the steps of:
estimating, in said radio terminal (2), a reception quality of an uplink signal at said radio base station (1), based on a downlink signal received from said radio base station (1); and
controlling, in said radio terminal (2), a transmission timing of a transmission request (SI) to said radio base station (1) to obtain permission to transmit the uplink signal, based on a result of said estimating step,
**characterized in that**, in said controlling step, a current uplink transmission electric power value is monitored in said radio terminal (2), wherein the transmission request (SI) is transmitted from said radio terminal (2) when the monitored transmission electric power value is below a predetermined transmission electric power threshold value, while transmission of the transmission request (SI) from said radio terminal (2) is deferred when the monitored transmission electric power value is equal to or greater than the transmission electric power threshold value.

2. The uplink communication method according to claim 1, wherein, in said controlling step, said transmission request (SI) is transmitted from said radio terminal (2) when the result of said estimating step is equal to or greater than a predetermined uplink quality threshold value, while transmission of the transmission request (SI) from said radio terminal (2) is deferred when the result of said estimating step is below the predetermined uplink quality threshold value.

3. The uplink communication method according to claim 1 or 2, wherein, in said controlling, a waiting time for the deferred transmission request is monitored in said radio terminal (2), and the transmission request (SI) is transmitted from said radio terminal (2) when the waiting time exceeds a predetermined time period.

4. The uplink communication method according to any one of claims 1 to 3, wherein, in said controlling, a battery remaining quantity is monitored in said radio terminal (2), and the transmission request (SI) is transmitted upon a result of the monitoring is equal to or greater than a predetermined battery threshold value.

5. The uplink communication method according to any one of claims 1 to 3, wherein, in said controlling, a battery remaining quantity is monitored in said radio terminal (2), and the result of estimation is controlled in such a way that the smaller the monitored battery remaining quantity, the harder the transmission request (SI) is transmitted.

6. The uplink communication method according to claim 1, wherein, in said controlling, the transmission timing is controlled based on input information about the transmission timing received from a user of said radio terminal (2).

7. The uplink communication method according to any one of claims 1 to 6, wherein, in said estimating, results of the estimation of the reception quality are averaged.

8. A radio terminal (2) for use in a radio communication system comprising a radio base station (1) with which the radio terminal (2) is configured to communicate (1) by radio, the radio terminal comprising:
a transmitting means (37-40) for transmitting a transmission request (SI) for permission to transmit an uplink signal to said radio base station (1);
an uplink reception quality estimating means (34) for estimating a reception quality of the uplink signal at said radio base station (1), based on a downlink signal received from said radio base station (1); and
an uplink transmission timing controlling means (35,36) for controlling said transmitting means (37-40) based on a result of the estimation by said uplink reception quality estimating means (34) to control transmission timing for the transmission request (SI) to said radio base station (1),
**characterized in that** the uplink transmission timing controlling means (36) further comprises:
a transmission electric power value monitoring unit for monitoring a current uplink transmission electric power value, and
a transmission electric power determining unit for determining whether the monitored transmission electric power value is below a predetermined transmission electric power threshold value, and
wherein said uplink transmission timing controlling unit (36) is configured to control said transmitting means (37-40) to transmit the transmission request (SI) when the monitored transmission electric power is below the predetermined transmission electric power threshold value, and to defer transmission of the transmission request (SI) when the monitored transmission electric power is equal to or greater than the transmission electric power threshold value.

9. The radio terminal according to claim 8, wherein said uplink transmission timing controlling means (35,36) is configured to control said transmitting means (37-40) to transmit the transmission request when the result of the estimation is equal to or greater than a predetermined uplink quality threshold value, and to defer transmission of the transmission request when the result of the estimation is below the uplink quality threshold value.

10. The radio terminal according to claim 9, wherein said uplink transmission timing controlling means (36) further comprises:
a signal retaining unit (35) for retaining the uplink signal when transmission of the transmission request (SI) is deferred.

11. The radio terminal according to claim 9 or 10, wherein said uplink transmission timing controlling means (36) further comprises:
a waiting time monitoring unit for monitoring a waiting time for transmission of the deferred transmission request (SI); and
a waiting time determining unit for determining whether the waiting time monitored by said waiting time monitoring unit exceeds a predetermined time period; and wherein
said uplink transmission timing controlling means (36) is configured to control said transmitting means (37-40) to transmit the transmission request (SI) when said waiting time determining unit determines that the waiting time exceeds the predetermined time period.

12. The radio terminal according to any one of claims 8 to 11, wherein said uplink transmission timing controlling means (36) further comprises:
a battery remaining quantity monitoring unit for monitoring a battery remaining quantity; and
a battery remaining quantity determining unit for determining whether a result of the monitoring by said battery remaining quantity monitoring unit is equal to or greater than a predetermined battery threshold value; and wherein
said uplink transmission timing controlling means (36) is configured to control said transmitting means (37-40) to transmit the transmission request (SI) when said battery remaining quantity determining unit determines that the result of monitoring is equal to or greater than the battery threshold value.

13. The radio terminal according to any one of claims 8 to 12, wherein said uplink transmission timing controlling means (36) further comprises:
a battery remaining quantity monitoring unit for monitoring a battery remaining quantity; and wherein
said uplink transmission timing controlling means (36) is configured to control the result of estimation such that the smaller the monitored battery remaining quantity, the harder the transmission request (SI) is transmitted.

14. The radio terminal according to claim 8, wherein said uplink transmission timing controlling means further (36) comprises:
an inputting unit (363) for accepting input information about the transmission timing from a user of said radio terminal (2); and wherein
said uplink transmission timing controlling means (36) is configured to control the transmission timing based on the input information inputted through said inputting unit (363).

15. The radio terminal according to any one of claims 8 through 14, wherein said uplink reception quality estimating means (34) further comprises:
an averaging process function unit (341) for averaging results of the estimation of the reception quality.

## Patentansprüche

1. Uplink-Kommunikationsverfahren in einem Funkkommunikationssystem, das eine Funkbasisstation (1) und ein Funkendgerät (2) umfasst, das mit der Funkbasisstation (1) kommuniziert, mit den Schritten:
Schätzen, in dem Funkendgerät (2), einer Empfangsgüte eines Uplink-Signals in der Funkbasisstation (1) auf der Basis eines Downlink-Signals, das von der Funkbasisstation (1) empfangen wird; und
Steuern, in dem Funkendgerät (2), einer Sendezeitlage einer Sendeanforderung (SI) an die Funkbasisstation (1), um die Erlaubnis zum Senden des Uplink-Signals zu erhalten, auf der Basis eines Ergebnisses des Schätzschrittes,
**dadurch gekennzeichnet, dass** bei dem Steuerungsschritt ein gegenwärtiger elektrischer Uplink-Sendeleistungswert in dem Funkendgerät (2) überwacht wird, bei dem die Sendeanforderung (SI) von dem Funkendgerät (2) gesendet wird, wenn der überwachte elektrische Sendeleistungswert unter einem vorbestimmten elektrischen Sendeleistungsschwellenwert liegt, während das Senden der Sendeanforderung (SI) von dem Funkendgerät (2) verzögert wird, wenn der überwachte elektrische Sendeleistungswert größer gleich dem elektrischen Sendeleistungsschwellenwert ist.

2. Uplink-Kommunikationsverfahren nach Anspruch 1, bei dem bei dem Steuerungsschritt die Sendeanforderung (SI) von dem Funkendgerät (2) gesendet wird, wenn das Ergebnis des Schätzschrittes größer gleich einem vorbestimmten Uplink-Güteschwellenwert ist, während das Senden der Sendeanforderung (SI) von dem Funkendgerät (2) verzögert wird, wenn das Ergebnis des Schätzschrittes unter dem vorbestimmten Uplink-Güteschwellenwert liegt.

3. Uplink-Kommunikationsverfahren nach Anspruch 1 oder 2, bei dem bei der Steuerung eine Wartezeit für die verzögerte Sendeanforderung in dem Funkendgerät (2) überwacht wird und die Sendeanforderung (SI) von dem Funkendgerät (2) gesendet wird, wenn die Wartezeit eine vorbestimmte Zeitperiode überschreitet.

4. Uplink-Kommunikationsverfahren nach einem der Ansprüche 1 bis 3, bei dem bei der Steuerung eine Batterierestmenge in dem Funkendgerät (2) überwacht wird und die Sendeanforderung (SI) gesendet wird, wenn ein Ergebnis des Überwachens größer gleich einem vorbestimmten Batterieschwellenwert ist.

5. Uplink-Kommunikationsverfahren nach einem der Ansprüche 1 bis 3, bei dem bei der Steuerung eine Batterierestmenge in dem Funkendgerät (2) überwacht wird und das Ergebnis des Schätzens in solch einer Weise gesteuert wird, dass das Senden der Sendeanforderung (SI) umso schwieriger wird, je kleiner die überwachte Batterierestmenge ist.

6. Uplink-Kommunikationsverfahren nach Anspruch 1, bei dem bei der Steuerung die Sendezeitlage auf der Basis von Eingangsinformationen über die Sendezeitlage gesteuert wird, die von einem Nutzer des Funkendgerätes (2) empfangen werden.

7. Uplink-Kommunikationsverfahren nach einem der Ansprüche 1 bis 6, bei dem bei dem Schätzen Ergebnisse der Schätzung der Empfangsgüte gemittelt werden.

8. Funkendgerät (2) zur Verwendung in einem Funkkommunikationssystem, das eine Funkbasisstation (1) umfasst, mit der das Funkendgerät (2) entsprechend seiner Konfiguration über Funk kommuniziert, welches Funkendgerät umfasst:
Sendemittel (37-40) zum Senden einer Sendeanforderung (SI) zwecks Erlaubnis zum Senden eines Uplink-Signals an die Funkbasisstation (1);
ein Uplink-Empfangsgüteschätzmittel (34) zum Schätzen einer Empfangsgüte des Uplink-Signals in der Funkbasisstation (1) auf der Basis eines von der Funkbasisstation (1) empfangenen Downlink-Signals; und
Uplink-Sendezeitlagensteuerungsmittel (35, 36) zum Steuern der Sendemittel (37-40) auf der Basis eines Ergebnisses der Schätzung durch das Uplink-Empfangsgüteschätzmittel (34), um die Sendezeitlage für die Sendeanforderung (SI) an die Funkbasisstation (1) zu steuern,
**dadurch gekennzeichnet, dass** das Uplink-Sendezeitlagensteuerungsmittel (36) ferner umfasst:
eine Überwachungseinheit des elektrischen Sendeleistungswertes zum Überwachen eines gegenwärtigen elektrischen Uplink-Sendeleistungswertes und
eine Bestimmungseinheit der elektrischen Sendeleistung zum Bestimmen, ob der überwachte elektrische Sendeleistungswert unter einem vorbestimmten elektrischen Sendeleistungsschwellenwert liegt, und
bei dem die Uplink-Sendezeitlagensteuerungseinheit (36) konfiguriert ist, um die Sendemittel (37-40) zu steuern, um die Sendeanforderung (SI) zu senden, wenn die überwachte elektrische Sendeleistung unter dem vorbestimmten elektrischen Sendeleistungsschwellenwert liegt, und um das Senden der Sendeanforderung (SI) zu verzögern, wenn die überwachte elektrische Sendeleistung größer gleich dem elektrischen Sendeleistungsschwellenwert ist.

9. Funkendgerät nach Anspruch 8, bei dem die Uplink-Sendezeitlagensteuerungsmittel (35, 36) konfiguriert sind, um die Sendemittel (37-40) zu steuern, um die Sendeanforderung zu senden, wenn das Ergebnis des Schätzens größer gleich einem vorbestimmten Uplink-Güteschwellenwert ist, und um das Senden der Sendeanforderung zu verzögern, wenn das Ergebnis des Schätzens unter dem Uplink-Güteschwellenwert liegt.

10. Funkendgerät nach Anspruch 9, bei dem das Uplink-Sendezeitlagensteuerungsmittel (36) ferner umfasst:
eine Signalhalteeinheit (35) zum Halten des Uplink-Signals, wenn das Senden der Sendeanforderung (SI) verzögert wird.

11. Funkendgerät nach Anspruch 9 oder 10, bei dem das Uplink-Sendezeitlagensteuerungsmittel (36) ferner umfasst:
eine Wartezeitüberwachungseinheit zum Überwachen einer Wartezeit zum Senden der verzögerten Sendeanforderung (SI); und
eine Wartezeitbestimmungseinheit zum Bestimmen, ob die durch die Wartezeitüberwachungseinheit überwachte Wartezeit eine vorbestimmte Zeitperiode überschreitet; und bei dem
das Uplink-Sendezeitlagensteuerungsmittel (36) konfiguriert ist, um die Sendemittel (37-40) zu steuern, um die Sendeanforderung (SI) zu senden, wenn die Wartezeitbestimmungseinheit bestimmt, dass die Wartezeit die vorbestimmte Zeitperiode überschreitet.

12. Funkendgerät nach einem der Ansprüche 8 bis 11, bei dem das Uplink-Sendezeitlagensteuerungsmittel (36) ferner umfasst:
eine Batterierestmengenüberwachungseinheit zum Überwachen einer Batterierestmenge; und
eine Batterierestmengenbestimmungseinheit zum Bestimmen, ob ein Ergebnis der Überwachung durch die Batterierestmengenüberwachungseinheit größer gleich einem vorbestimmten Batterieschwellenwert ist; und bei dem
das Uplink-Sendezeitlagensteuerungsmittel (36) konfiguriert ist, um die Sendemittel (37-40) zu steuern, um die Sendeanforderung (SI) zu senden, wenn die Batterierestmengenbestimmungseinheit bestimmt, dass das Ergebnis des Überwachens größer gleich dem Batterieschwellenwert ist.

13. Funkendgerät nach einem der Ansprüche 8 bis 12, bei dem das Uplink-Sendezeitlagensteuerungsmittel (36) ferner umfasst:
eine Batterierestmengenüberwachungseinheit zum Überwachen einer Batterierestmenge; und bei dem
das Uplink-Sendezeitlagensteuerungsmittel (36) konfiguriert ist, um das Ergebnis des Schätzens so zu steuern, dass das Senden der Sendeanforderung (SI) umso schwieriger wird, je kleiner die überwachte Batterierestmenge ist.

14. Funkendgerät nach Anspruch 8, bei dem das Uplink-Sendezeitlagensteuerungsmittel (36) ferner umfasst:
eine Eingabeeinheit (363) zum Akzeptieren von Eingangsinformationen über die Sendezeitlage von einem Nutzer des Funkendgerätes (2); und bei dem
das Uplink-Sendezeitlagensteuerungsmittel (36) konfiguriert ist, um die Sendezeitlage auf der Basis der durch die Eingabeeinheit (363) eingegebenen Eingangsinformationen zu steuern.

15. Funkendgerät nach einem der Ansprüche 8 bis 14, bei dem das Uplink-Empfangsgüteschätzmittel (34) ferner umfasst:
eine Mittelungsprozessfunktionseinheit (341) zum Mitteln von Ergebnissen der Schätzung der Empfangsgüte.

## Revendications

1. Procédé de communication sur liaison montante dans un système de radiocommunication comprenant une station de base radio (1) et un terminal radio (2) communiquant avec ladite station de base radio (1), comprenant les étapes suivantes :
estimation, dans ledit terminal radio (2), d'une qualité de réception d'un signal de liaison montante au niveau de ladite station de base radio (1), à partir d'un signal de liaison descendante reçu en provenance de ladite station de base radio (1) ; et
commande, dans ledit terminal radio (2), d'une synchronisation de transmission d'une demande de transmission (SI) à ladite station de base radio (1) pour obtenir la permission de transmettre le signal de liaison montante, en fonction d'un résultat de ladite étape d'estimation,
**caractérisé en ce que**, dans ladite étape de commande, une valeur courante de puissance électrique de transmission sur liaison montante est surveillée dans ledit terminal radio (2), où la demande de transmission (SI) est transmise par ledit terminal radio (2) lorsque la valeur de puissance électrique de transmission surveillée est inférieure à une valeur seuil de puissance électrique de transmission prédéterminée, et tandis que la transmission de la demande de transmission (SI) par ledit terminal radio (2) est différée lorsque la valeur de puissance électrique de transmission surveillée est égale ou supérieure à la valeur seuil de puissance électrique de transmission.

2. Procédé de communication sur liaison montante selon la revendication 1, dans lequel, dans ladite étape de commande, ladite demande de transmission (SI) est transmise par ledit terminal radio (2) lorsque le résultat de ladite étape d'estimation est égal ou supérieur à une valeur seuil de qualité de liaison montante prédéterminée, tandis que la transmission de la demande de transmission (SI) par ledit terminal radio (2) est différée lorsque le résultat de ladite étape d'estimation est inférieur à la valeur seuil de qualité de liaison montante prédéterminée.

3. Procédé de communication sur liaison montante selon la revendication 1 ou 2, dans lequel, dans ladite commande, un temps d'attente pour la demande de transmission différée est surveillé dans ledit terminal radio (2), et la demande de transmission (SI) est transmise par ledit terminal radio (2) lorsque le temps d'attente excède un laps de temps prédéterminé.

4. Procédé de communication sur liaison montante selon l'une quelconque des revendications 1 à 3, dans lequel, dans ladite commande, une quantité de batterie restante est surveillée dans ledit terminal radio (2), et la demande de transmission (SI) est transmise lorsqu'un résultat de la surveillance est égal ou supérieur à une valeur seuil de batterie prédéterminée.

5. Procédé de communication sur liaison montante selon l'une quelconque des revendications 1 à 3, dans lequel, dans ladite commande, une quantité de batterie restante est surveillée dans ledit terminal radio (2), et le résultat d'estimation est contrôlé de telle sorte que la transmission de la demande de transmission (SI) soit d'autant plus difficile que la quantité de batterie restante surveillée est petite.

6. Procédé de communication sur liaison montante selon la revendication 1, dans lequel, dans ladite commande, la synchronisation de transmission est commandée en fonction d'informations d'entrée concernant la synchronisation de transmission, reçues d'un utilisateur dudit terminal radio (2).

7. Procédé de communication sur liaison montante selon l'une quelconque des revendications 1 à 6, dans lequel, dans ladite estimation, il est calculé une moyenne des résultats de l'estimation de la qualité de réception.

8. Terminal radio (2) pour utilisation dans un système de radiocommunication comprenant une station de base radio (1) avec laquelle le terminal radio (2) est configuré pour communiquer (1) par liaison radio, le terminal radio comprenant :
des moyens de transmission (37-40) pour transmettre une demande de transmission (SI) afin d'obtenir la permission de transmettre un signal de liaison montante à ladite station de base radio (1) ;
des moyens d'estimation de qualité de réception de liaison montante (34) pour estimer une qualité de réception du signal de liaison montante au niveau de ladite station de base radio (1), à partir d'un signal de liaison descendante reçu en provenance de ladite station de base radio (1) ; et
des moyens de commande de synchronisation de transmission sur liaison montante (35, 36) pour commander lesdits moyens de transmission (37-40) en fonction d'un résultat de l'estimation effectuée par lesdits moyens d'estimation de qualité de réception de liaison montante (34) afin de commander la synchronisation de transmission pour la demande de transmission (SI) à ladite station de base radio (1),
**caractérisé en ce que** les moyens de commande de synchronisation de transmission sur liaison montante (36) comprennent, en outre :
une unité de surveillance de valeur de puissance électrique de transmission pour surveiller une valeur courante de puissance électrique de transmission sur liaison montante, et
une unité de détermination de puissance électrique de transmission pour déterminer si la valeur de puissance électrique de transmission surveillée est inférieure à une valeur seuil de puissance électrique de transmission prédéterminée, et
dans lequel ladite unité de commande de synchronisation de transmission sur liaison montante (36) est configurée pour commander auxdits moyens de transmission (37-40) de transmettre la demande de transmission (SI) lorsque la puissance électrique de transmission surveillée est inférieure à la valeur seuil de puissance électrique de transmission prédéterminée, et de différer la transmission de la demande de transmission (SI) lorsque la puissance électrique de transmission surveillée est égale ou supérieure à la valeur seuil de puissance électrique de transmission.

9. Terminal radio selon la revendication 8, dans lequel lesdits moyens de commande de synchronisation de transmission sur liaison montante (35, 36) sont configurés pour commander auxdits moyens de transmission (37-40) de transmettre la demande de transmission lorsque le résultat de l'estimation est égal ou supérieur à une valeur seuil de qualité de liaison montante prédéterminée, et de différer la transmission de la demande de transmission lorsque le résultat de l'estimation est inférieur à la valeur seuil de qualité de liaison montante.

10. Terminal radio selon la revendication 9, dans lequel lesdits moyens de commande de synchronisation de transmission sur liaison montante (36) comprennent en outre :
une unité de retenue de signal (35) pour retenir le signal de liaison montante lorsque la transmission de la demande de transmission (SI) est différée.

11. Terminal radio selon la revendication 9 ou 10, dans lequel lesdits moyens de commande de synchronisation de transmission sur liaison montante (36) comprennent en outre :
une unité de surveillance de temps d'attente pour surveiller un temps d'attente pour la transmission de la demande de transmission (SI) différée ; et
une unité de détermination de temps d'attente pour déterminer si le temps d'attente surveillé par ladite unité de surveillance de temps d'attente excède un laps de temps prédéterminé ; et dans lequel
lesdits moyens de commande de synchronisation de transmission sur liaison montante (36) sont configurés pour commander auxdits moyens de transmission (37-40) de transmettre la demande de transmission (SI) lorsque ladite unité de détermination de temps d'attente détermine que le temps d'attente excède le laps de temps prédéterminé.

12. Terminal radio selon l'une quelconque des revendications 8 à 11, dans lequel lesdits moyens de commande de synchronisation de transmission sur liaison montante (36) comprennent en outre :
une unité de surveillance de quantité de batterie restante pour surveiller une quantité de batterie restante ; et
une unité de détermination de quantité de batterie restante pour déterminer si un résultat de la surveillance par ladite unité de surveillance de quantité de batterie restante est égal ou supérieur à une valeur seuil de batterie prédéterminée ; et dans lequel
lesdits moyens de commande de synchronisation de transmission sur liaison montante (36) sont configurés pour commander auxdits moyens de transmission (37-40) de transmettre la demande de transmission (SI) lorsque ladite unité de détermination de quantité de batterie restante détermine que le résultat de la surveillance est égal ou supérieur à une valeur seuil de batterie prédéterminée.

13. Terminal radio selon l'une quelconque des revendications 8 à 12, dans lequel lesdits moyens de commande de synchronisation de transmission sur liaison montante (36) comprennent en outre :
une unité de surveillance de quantité de batterie restante pour surveiller une quantité de batterie restante ; et dans lequel
lesdits moyens de commande de synchronisation de transmission sur liaison montante (36) sont configurés pour contrôler le résultat de l'estimation de telle sorte que la transmission de la demande de transmission (SI) soit d'autant plus difficile que la quantité de batterie restante surveillée est petite.

14. Terminal radio selon la revendication 8, dans lequel lesdits moyens de commande de synchronisation de transmission sur liaison montante (36) comprennent :
une unité d'entrée (363) pour accepter des informations d'entrée concernant la synchronisation de transmission provenant d'un utilisateur dudit terminal radio (2) ; et dans lequel
lesdits moyens de commande de synchronisation de transmission sur liaison montante (36) sont configurés pour commander la synchronisation de transmission en fonction des informations d'entrée introduites via ladite unité d'entrée (363).

15. Terminal radio selon l'une quelconque des revendications 8 à 14, dans lequel lesdits moyens d'estimation de qualité de réception sur liaison montante (34) comprennent en outre :
une unité de fonction de traitement de calcul de moyenne (341) pour calculer la moyenne des résultats de l'estimation de la qualité de réception.
